## Europäisches Patentamt
## European Patent Office
## Office européen des brevets

(19)

(11) Publication number: **0 108 980**

**B1**

(12) # EUROPEAN PATENT SPECIFICATION

(45) Date of publication of patent specification: **07.01.87**

(51) Int. Cl.⁴: **E 21 B 17/042,** E 21 B 17/08, F 16 L 15/00

(21) Application number: **83110809.7**

(22) Date of filing: **28.10.83**

(54) **Tubular connection.**

(30) Priority: **15.11.82 US 441870**

(43) Date of publication of application:
**23.05.84 Bulletin 84/21**

(45) Publication of the grant of the patent:
**07.01.87 Bulletin 87/02**

(84) Designated Contracting States:
**AT BE CH DE FR GB IT LI LU NL SE**

(56) References cited:
**FR-A-2 364 322**
**US-A-2 107 716**
**US-A-2 239 942**
**US-A-2 893 759**
**US-A-3 100 656**
**US-A-3 224 799**
**US-A-3 336 054**
**US-A-3 508 771**
**US-A-4 009 893**
**US-A-4 026 583**
**US-A-4 161 332**
**US-A-4 244 607**
**US-A-4 253 687**

(73) Proprietor: **QUANEX CORPORATION**
**13401 Highway 90 East**
**Houston Texas 77013 (US)**

(72) Inventor: **Church, Kristy Lynn**
**Route 3, Box 72-A**
**Montgomery, Texas 77356 (US)**

(74) Representative: **Reverdin, André Pierre**
**DIETLIN, MOHNHAUPT & Cie S.A. Rue des**
**Epinettes 19**
**CH-1227 Genève (CH)**

Courier Press, Leamington Spa, England.

## Description

### Background

Casing and tubing for wells are made up in sections and lowered into the well bore. The sections have been joined by threaded connections with the sections having box and pin ends for direct assembly or with the sections having pin ends joined by an internally threaded coupling. As wells get deeper and encounter corrosive conditions, such as sour gas and salt water, there is a need for higher connection efficiencies in tensile and compressive strength as well as greater resistance to internal and external well bore pressures without substantial increases in the connection diameter.

An early effort to increase the strength of well tubular connections is shown in U.S. Patent No. 2,772,102 which suggests threads having a normal load bearing face and a tapered flank with the root and crest being in sealing contact at the inner end of the threads in the coupling. U.S. Patent No. 2,980,451 suggests the use of seal ring in a groove in the female threads to accomplish the seal. U.S. Patent No. 3,224,799 discloses a tubular connection in which the load bearing face has a slight negative angle and the other face has an angle in the range from 30° to 60°. U.S. Patent No. 3,489,437 includes a reverse shoulder at the inner end of the female threads for engaging a similar taper on the pin end so that the pin is urged outward to assure continued engagement of the threads near the end of the pin. U.S. Patent 3,508,771 includes a shoulder on the female member against which the male member engages to protect the threads from damage when the connection is torqued.

An undercut type of threading is shown in U.S. Patent No. 3,989,284. Two sets of slightly tapered threads in a tubular connection with a seal between the two sets of threads and a reverse shoulder on the female member engaged by the end of the male member are shown in U.S. Patent No. 4,009,893. A similar connection with a double set of cylindrical threads is shown in U.S. Patent Nos. 4,161,332, 4,192,533 and 4,244,607, another one with a double set of tapered threads is shown in U.S. Patent No. 2,239,942.

### Summary

The present invention concerns an improved well tubular connection according to the preamble of claim 1. It is characterized by the characterizing part of claim 1, comprising in combination, a compressible or deformable primary metal-to-metal seal and a reverse shoulder in both a pin and box connection or a coupling connection.

An object of the present invention is to provide an improved threaded connection for well tubular goods which has the yield strength of the tubular member.

A further object is to provide an improved threaded connection for well tubular goods which does not cross thread or gall during assembly or disassembly.

Another object is to provide an improved threaded connection for well tubular goods having separate seals against both internal and external pressures.

Still another object is to provide an improved threaded connection for well tubular goods having both a resilient seal and a metal-to-metal seal.

A still further object is to provide an improved threaded connection for well tubular goods which resists jump-out of the threads under high tensile loads.

### Brief description of the drawings

These and other objects and advantages of the present invention are hereinafter set forth and explained with reference to the drawings wherein:

Figure 1 is a half-sectional view of the improved coupling connection of the present invention.

Figure 2A is a partial detail sectional view of the male threads. Figure 2B shows a partial detail sectional view of the female threads of the improved connection of the present invention. Figure 2C illustrates an enlarged sectional view of a single thread of the present invention.

Figure 3 is a half-sectional view of the improved pin and box connection of the present invention.

### Description of the preferred embodiments

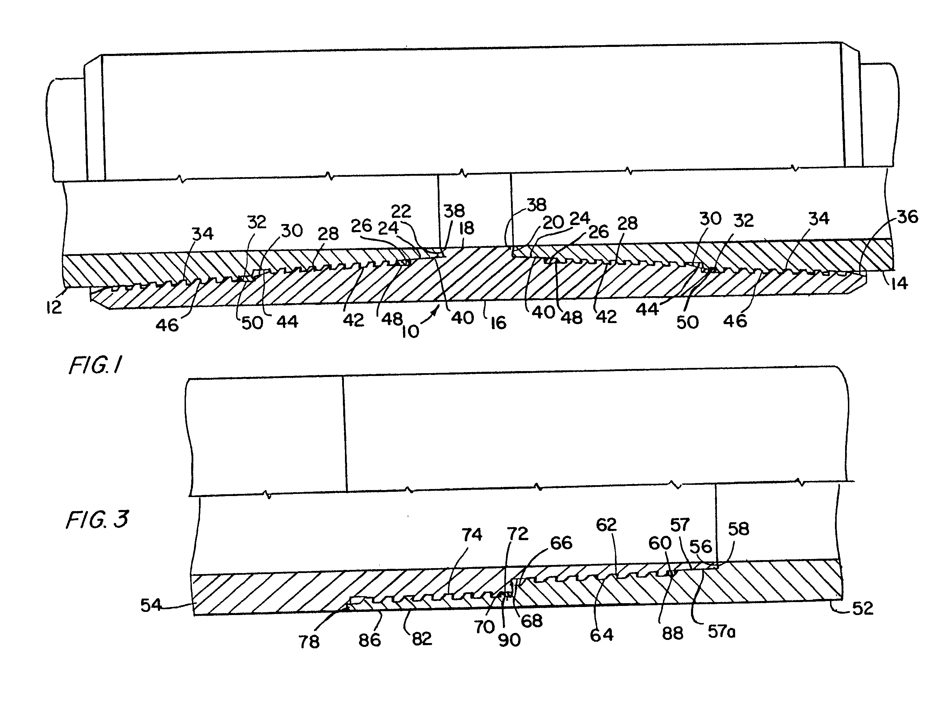

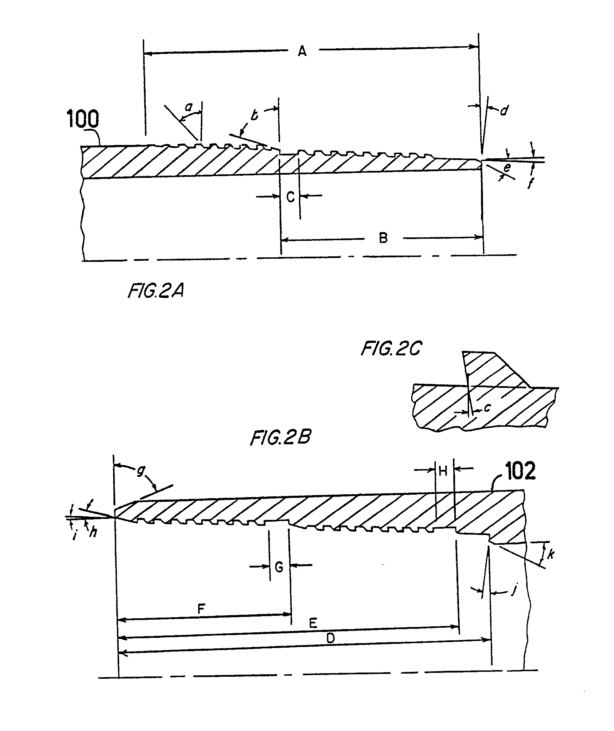

As shown in Figure 1, joint 10 includes plain end male members 12 and 14 of a uniform diameter joined by coupling 16. Coupling 16 includes central portion 18 having the same bore as the inside diameters through male members 12 and 14 and terminates in reverse or undercut shoulders 20 and 22. Since the interior on each side of coupling 16 is the same but reversed, one side is described hereafter. Tapered surface 24 defines a smooth inner peripheral surface which extends from shoulder 20, tapering slightly outwardly, and terminates in seal groove 26. First tapered hook threads 28 extend from seal groove 26 to tapered surface 30 which leads into seal groove 32. Second tapered hook threads 34 extend from seal groove 32 to the outer end of coupling 16 and terminate in tapered surface 36.

The threaded portions of the male members 12 and 14 are the same so only member 14 is hereafter described. The end of member 14 includes tapered shoulder 38 which mates with reverse shoulder 20. Surface 40 defines a smooth outer peripheral surface which tapers outwardly from end shoulder 38 to first tapered hook threads 42 which end in recess 44. Second tapered hook threads 46 extend to the exterior of member 14.

When assembled as shown in Figure 1 members 12 and 14 are threaded until shoulders 38 abut reverse shoulders 20 and 22. Seal rings 48 are positioned in seal grooves 26 and seal rings 50 are positioned between the sets of threads. Also, a compressible or deformable metal-to-metal seal is provided by the engagement of surfaces 24 and 40 which form smooth seal contact areas with the reverse shoulders 20 and 22 assuring that surfaces 24 and 40 are maintained in sealing engagement. The metal-to-metal seal of surfaces 24 and 40 and seal ring 48 provide independent primary internal pressure seals and seal rings 50 provides the primary external pressure seal for each pin end.

As shown in Figure 3, the pin and box connection form of the present invention includes box 52 and pin 54 having plain ends. Box 52 includes internal reverse shoulder 56 which engages tapered surface 58 on pin 54 and tapered surface 57 on box 52 engages tapered surface 57a on pin 54. Seal groove 60 leads into first tapered hook threads 62 which mate with threads 64 on pin 54 and end in surface 66 facing recess 68 on pin 54. Surface 66 ends in reverse shoulder 70 and seal groove 72 leads into second tapered hook threads 74 which end in reverse shoulder 78. Threads 82 engage threads 74 with reverse shoulder 86 engaging reverse shoulder 78 to prevent its outward movement.

Seal ring 88 is positioned in seal groove 60 and seal ring 90 is positioned in seal groove 72. Such seals together with the compressible or deformable metal-to-metal seal of surfaces 57 and 57a provide improved sealing of the connection.

Figures 2A, 2B and 2C are a typical example of male member 100 and coupling 102 of the present invention for a 24,5 cm (9-5/8 inch) diameter, 1,9 cm (0.750'') wall casing. The following table is a listing of the preferred dimensions and angles as shown in the drawings for a single particular size and application and will change for other sizes and applications.

| Dimensions | | Angles | |
|---|---|---|---|
| A | 8.665 | a | 30° |
| B | 4.6625 | b | 75° |
| C | 0.375 | c | 12° |
| D | 8.610 | d | 15° |
| E | 7.865 | e | 20° |
| F | 4.0025 | f | 4° |
| G | 0.375 | g | 70° |
| H | 0.375 | h | 15° |
| | | i | 4° |
| | | j | 15° |
| | | k | 15° |
| | | l | 4° |

As can be seen the load bearing side of the tapered hook threads has an undercut in the range from 3 to 13° and preferably of 12° for the example size. This reverse angle functions to prevent jump-out of the threads. Also, the steep thread tapers which are preferred to approximately 12,5 cm/m (1.5 inches per foot) as compared to tapers of the prior art which have been 6,25 cm/m (0.75 inch per foot) up to 9,4 cm/m (1.125 inches per foot) provide a greater contact area per thread during stabbing which decreases the opportunity of cross threading or thread damage during assembly. The dual step thread design provides greater stabbing clearance. The steeper tapers provide increased stabbing depth to protect against pin nose damage and better stability during assembly. The steep taper of threads reduces the number of turns required from stabbing to power tight to reduce assembly time. The hand tight plane to the power tight plane is less than one turn. This reduces the starter load scraping distance making and breaking the connection to reduce the chance of galling of the threads when made of materials such as stainless steel or high chrome steels.

The dual step steep taper threads allow assembly at a greater misaligned angle without damage to the connection. The coarse pitch and depth of stab function to prevent cross threading when the connection is assembled with imperfect alignment. With the steep taper dual step threads of the present invention the thread contact during stabbing is increased, thus decreasing the opportunity of thread rolling and shearing.

A connection as herein disclosed has been tested by the University of Illinois and was found to have 100% efficiency, i.e., the connection yield strength was equal to the yield strength of the tubular member.

During such testing, three 24,5×1,9 cm, (9-5/8 inch by 3/4 inch) wall oil well casings with couplings were tested in tension. The first specimen was tested to destruction and failed under load at 1286 tons (2.84 million pounds). The mode of failure occurred by fracture of the pin in the coupling elongation of the first specimen was approximately ten per cent. Because of equipment problems, specimen number 2 was tested to 906 tons (two million pounds) with an elongation of 1-1/2 percent and specimen number 3 was tested to 906 tons (two million pounds) with an elongation of approximately one per cent. Neither specimen 2 nor 3 experienced failure at the 906 tons (two million pound) level.

It should be noted that the improved connection of the present invention provides two internal pressure seals including a compressible primary metal-to-metal seal and a supplementary seal made up of a resilient corrosion resistant material and additionally, a primary resilient corrosion resistant external pressure seal. This connection is applicable to the threaded and coupled connection shown, and the pin and box connections shown and to an externally upset end connection.

## Claims

1. A threaded connection for plain end tubular goods including a male member (12, 14, 54, 100), and a female member (10, 52, 102), each of said members having a double set of mating steep tapered hook threads (28, 34, 62, 74) characterized by, in combination, a slightly tapered smooth surface (40) at the end of the male member (12, 14, 54, 100), a mating tapered smooth surface (24) on said female member (10, 52, 102), a reverse shoulder (20, 22) at the end of said surface (24, 57) on said female member, and the end of said male member having an end tapered surface (38, 58) for engaging said reverse shoulder (20, 22, 56), whereby when said connection is made up, said surfaces (24, 40) are held in sealing engagement.

2. A connection according to claim 1 including a resilient seal ring (50) positioned between said members (10, 12) at a point between the first (28) and second (34) set of tapered threads.

3. A connection according to claim 2 including a resilient seal ring (48) positioned between said members (10, 12) at the inner end of threads in the female member (10).

4. A connection according to claim 1 wherein said male member is a pin end (54), said female member is a box end (52).

5. A connection according to claim 1 wherein said female member is a coupling (10) and including a second male member (14).

6. A connection according to claim 1, wherein said members (10, 12) have a straight interior bore of a uniform inner diameter.

## Patentansprüche

1. Gewindeverbindung für glatt endende rohrförmige Gegenstände, mit einem Aussengewinde - Teil (12, 14, 54, 100) und einem Innengewinde - Teil (10, 52, 102), wobei jedes dieser Teile ein zum anderen Teil passendes Kegel - Zweifachgewinde mit steil hakenförmigem Windungsquerschnitt (28, 34, 62, 74) aufweist, gekennzeichnet durch die Kombination einer sich schwach verjüngenden glatten Fläche (40) am Ende des Aussengewinde - Teils (12, 14, 54, 100), einer dazu passenden, sich schwach verjüngenden Fläche (24) am Ende des Innengewinde - Teils (10, 52, 102) einer hinterschnittenen Schulter (20, 22) am Ende der genannten Fläche (24, 57) des Innengewinde - Teils, und einer am Ende sich verjüngenden Fläche (38, 58) am Ende des Aussengewinde - Teils zur Anlage an die genannte hinterschnittene Schulter (20, 22, 56) wobei die genannten Flächen (24, 40) dichtend aneinanderliegen, wenn die Verbindung hergestellt ist.

2. Gewindeverbindung nach Anspruch 1, mit einem elastichen Dichtungsring (50) zwischen den genannten Teilen (10, 12) an der Uebergangsstelle zweichen dem ersten (28) und dem zweiten (34) Kegelgewinde.

3. Gewindeverbindung nach Anspruch 1, mit einem elastischen Dichtungsring (48) zwischen den genannten Teilen (10, 12) am Innenende der Gewinde im Aussengewinde - Teil (10).

4. Gewindeverbindung nach Ansrpuch 1, bei der das Aussengewinde - Teil ein gewöhnliches Rohrende (54) und das Innengewinde - Teil ebenfalls ein freies Rohrende (52) ist.

5. Gewindeverbindung nach Anspruch 1, bei der das Innengewinde - Teil eine Muffe (10) ist, in die ein zweites Aussengewinde-Teil (14) einschraubbar ist.

6. Gewindeverbindung nach Anspruch 1, bei der die genannten Teile (10, 12) eine durchgehende Innenbohrung mit gleichförmigem Kaliber aufweisen.

## Revendications

1. Raccordement fileté pour objet tubulaire à extrémité plate comportant une partie mâle (12, 14, 54, 100) et un partie femelle (10, 52, 102), chacune desdites parties possédant une double série de filetages côniques en forme de crochets à forte pente (28, 34; 62, 74) destinés à coopérer, caractérisé par une portée lisse légèrement cônique (40) à l'extrémité de la partie mâle (12, 14, 54, 100), une portée lisse légèrement cônique (24) destinée à s'y accoupler à l'extrémité de ladite partie femelle (10, 52, 102), un épaulement biseauté (20, 22) à l'extrémité de ladite portée (24, 57) ladite partie femelle (38, 58) et une extrémité de ladite partie mâle présentant un épaulement incliné (38, 58) venant coopérer avec ledit épaulement biseauté en sens inverse (20, 22, 56), pris en combinaison de telle manière que, lorsque ledit raccordement est assemblé, lesdites portées (24, 40) sont serrées de manière étanche.

2. Raccordement selon la revendication 1 comprenant un joint annulaire élastique (50) disposé entre lesdites parties (10, 12) dans une position intermédiaire entre la première (28) et la seconde série (34) de filetages coniques.

3. Raccordement selon la revendication 2 comprenant un joint annulaire élastique (48) disposé entre lesdites parties (10, 12) à l'extrémité intérieure des filetages dans la partie femelle (10).

4. Raccordement selon la revendication 1 dans lequel ladite partiee mâle se termine par une broche (54) et ladite partie femelle par un manchon (52).

5. Raccordement selon la revendication 1 dans lequel ladite partie femelle est un raccord (10) et comprenant une seconde partie mâle (14).

6. Raccordement selon la revendication 1 dans lequel lesdites parties (10, 12) présentent un alésage intérieur droit d'un même diamètre intérieur.

FIG. 1

FIG. 3

0 108 980

FIG.2A

FIG.2C

FIG.2B